# FASCICULE DE BREVET EUROPEEN

(11) **EP 4 337 850 B1**
(45) Date de publication et mention de la délivrance du brevet: **10.12.2025**
(21) Numéro de dépôt: 22731265.9
(22) Date de dépôt: 12.05.2022
(51) Int. Cl.: F02K 1/72, F02K 1/76, F02C 7/20

(54) **ENSEMBLE PROPULSIF D'AERONEF COMPRENANT UN ACTIONNEUR RELIE A UN BRAS STRUCTURAL TEL QU'UNE AUBE DIRECTRICE DE SORTIE**
FLUGZEUGANTRIEBSANORDNUNG MIT EINEM AKTUATOR, DER MIT EINEM STRUKTURARM WIE ETWA EINER AUSLASSLEITSCHAUFEL VERBUNDEN IST
AIRCRAFT PROPULSION ASSEMBLY COMPRISING AN ACTUATOR CONNECTED TO A STRUCTURAL ARM SUCH AS AN OUTLET GUIDE VANE

(30) Priorité: 14.05.2021 FR 2105075
(43) Date de publication de la demande: 20.03.2024
(73) Titulaire: Safran Nacelles, 76700 Gonfreville-l'Orcher (FR)
(72) Inventeur: BOILEAU, Patrick André, 77550 MOISSY-CRAMAYEL (FR)
(74) Mandataire: Santarelli
(86) Numéro de dépôt international: PCT/FR2022/050912
(87) Numéro de publication internationale: WO 2022/238664

(56) Documents cités:
- US-A- 3 262 270
- US-A- 3 500 645
- US-B2- 8 418 436

## Description

### Domaine technique

L'invention se rapporte au domaine des ensembles propulsifs d'aéronef intégrant un inverseur de poussée.

L'invention présente un intérêt particulier pour des inverseurs à grilles coulissantes.

### État de la technique antérieure

Les turbomachines à grand taux de dilution actuellement en service dans le secteur aéronautique comprennent généralement un carter de soufflante prolongé axialement à l'arrière par un carter intermédiaire.

L'expression « carter externe » est ici utilisée pour désigner l'ensemble formé par le carter de soufflante et le carter intermédiaire, ou uniquement le carter de soufflante lorsque la turbomachine ne comprend pas de carter intermédiaire.

Dans un ensemble propulsif conventionnel équipé d'un inverseur à grilles coulissantes, tel que décrit par exemple dans le document FR2999239A1, les grilles s'étendent autour du carter externe lorsque l'inverseur est en configuration de poussée directe. Le document US8418436 décrit également un inverseur de poussée à grilles coulissantes.

Afin d'éviter un chargement excessif de la virole formée par le carter externe, les actionneurs d'inverseur sont généralement reliés à des brides structurales formées par des extrémités axiales du carter de soufflante et/ou du carter intermédiaire.

Une solution de fixation connue dans l'état de la technique antérieure consiste à monter un tel actionneur sur une structure de liaison formant une poutre fixée d'une part sur une bride avant et d'autre part sur une bride arrière du carter de soufflante.

Une telle structure de liaison peut s'avérer incompatible avec des architectures contemporaines d'ensemble propulsif dans lesquelles l'espace disponible autour du carter externe est réduit.

Par ailleurs, il existe un besoin de soulager le carter externe, en particulier vis-à-vis des charges mécaniques provenant de l'inverseur.

### Exposé de l'invention

L'invention vise à procurer un ensemble propulsif équipé d'un inverseur à structure axialement mobile qui soit compatible avec les architectures contemporaines et qui permette de réduire ou d'optimiser le chargement du carter externe, en particulier lorsque la structure mobile de l'inverseur est sollicitée axialement vers l'arrière.

A cet effet, l'invention a pour objet un ensemble propulsif pour aéronef selon les caractéristiques de la revendication 1.

L'invention permet de faire supporter au moins une partie des efforts de l'actionneur par l'au moins un bras, en les faisant transiter directement dans celui-ci via la structure de liaison et les moyens de fixation.

Cela permet de soulager le carter externe, notamment lorsque la structure mobile est sollicitée axialement vers l'arrière, c'est-à-dire en configuration d'inversion de poussée et lors du déplacement de la structure mobile vers cette configuration.

L'invention permet aussi de réduire l'encombrement des pièces de l'ensemble propulsif, notamment de la structure de liaison, autour du carter externe.

L'invention permet ainsi d'améliorer les performances de l'ensemble propulsif et est compatible avec les architectures contemporaines à grand taux de dilution.

Dans un mode de réalisation, le bras forme une aube directrice de sortie, aussi appelée « OGV » de l'anglais « Outlet Guide Vane ».

Dans un mode de réalisation préféré, l'actionneur est relié à un cadre arrière des grilles.

La structure mobile comprend de préférence un ou plusieurs capots.

L'actionneur peut être relié à ce ou ces capots mobiles.

De préférence, le ou les capots sont de préférence solidaires du cadre arrière des grilles.

Concernant l'actionneur, celui-ci est de préférence un vérin.

Dans un mode de réalisation, le vérin est télescopique.

L'actionneur peut être configuré pour s'étendre radialement en-dessous des grilles ou, alternativement, dans leur épaisseur.

Dans une première variante de réalisation, le carter externe comprend un carter de soufflante et un carter intermédiaire.

Selon cette première variante, le bras est de préférence fixé au carter intermédiaire. Alternativement, le bras peut être fixé au carter de soufflante.

Dans une deuxième variante de réalisation, le carter externe comprend un carter de soufflante et est dépourvu de carter intermédiaire.

Dans un mode de réalisation, les moyens de fixation s'étendent radialement à travers une virole du carter externe.

Avantageusement, les moyens de fixation peuvent être configurés pour fixer le bras au carter externe.

Cela permet notamment de mutualiser les moyens de fixation et d'améliorer la transmission des efforts entre le bras et la structure de liaison.

A titre d'exemple, les moyens de fixation peuvent comprendre des vis et/ou des goujons et/ou d'autres types d'organes de fixation.

Dans un mode de réalisation, la structure de liaison comprend un élément de support solidaire du carter externe.

L'élément de support peut être une pièce d'interface fixée sur le carter externe par le motoriste et configurée de sorte à pouvoir y fixer une autre pièce de la structure de liaison telle qu'une ferrure. Il est ainsi possible de monter ou de remplacer d'autres parties de la structure de liaison et de la nacelle sans toucher à la turbomachine, et en particulier à la fixation dudit élément de support sur la turbomachine, après que celle-ci a été assemblée et testée.

La structure de liaison comprend une ferrure fixée sur l'élément de support.

L'ensemble propulsif comprend un cardan configuré pour articuler l'actionneur sur la ferrure ou sur une autre pièce formée par la structure de liaison.

Dans un mode de réalisation, la ferrure est fixée sur une bride du carter externe.

Ainsi, dans un mode de réalisation, la ferrure peut être fixée d'une part sur une bride du carter externe et d'autre part sur un élément de support tel que décrit ci-dessus.

Plus généralement, la structure de liaison peut être fixée sur plusieurs parties du carter externe et/ou du bras, afin par exemple de répartir les efforts de l'actionneur et d'améliorer le ou les chemins d'effort correspondants.

La structure de liaison peut présenter de nombreuses géométries.

Par exemple, la ferrure de cette structure de liaison peut former une chape d'articulation s'étendant au droit du bras.

Pour autre exemple, la ferrure de la structure de liaison peut former une poutre s'étendant longitudinalement.

Dans un mode de réalisation, la structure de liaison comprend une partie avant reliée à l'actionneur et une partie arrière reliée au carter externe de sorte que l'actionneur s'étende en porte-à-faux.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une demi-vue schématique en coupe longitudinale d'un ensemble propulsif conforme à l'invention, comprenant un inverseur de poussée en configuration de poussée directe ;
[Fig. 2] est une demi-vue schématique en coupe longitudinale de l'ensemble propulsif de la figure 1, l'inverseur étant en configuration d'inversion de poussée ;
[Fig. 3] est une vue schématique partielle d'un dispositif d'actionnement d'inverseur conforme à l'invention, comprenant un vérin et une structure de liaison selon un premier mode de réalisation, le vérin étant en position rétractée ;
[Fig. 4] est une vue schématique partielle du dispositif d'actionnement de la figure 3, le vérin étant en position déployée ;
[Fig. 5] est une vue schématique partielle en perspective du dispositif d'actionnement de la figure 3 ;
[Fig. 6] est une vue schématique partielle d'un dispositif d'actionnement d'inverseur conforme à l'invention, comprenant un vérin et une structure de liaison selon un deuxième mode de réalisation, le vérin étant en position rétractée ;
[Fig. 6A] est une vue schématique partielle en coupe transversale du dispositif d'actionnement de la figure 6 ;
[Fig. 7] est une vue schématique partielle d'un dispositif d'actionnement d'inverseur qui n'est pas revendiqué, comprenant un vérin et une structure de liaison selon un troisième mode de réalisation, le vérin étant en position rétractée ;
[Fig. 7A] est une vue schématique partielle en coupe transversale du dispositif d'actionnement de la figure 7.

### Description détaillée de modes de réalisation

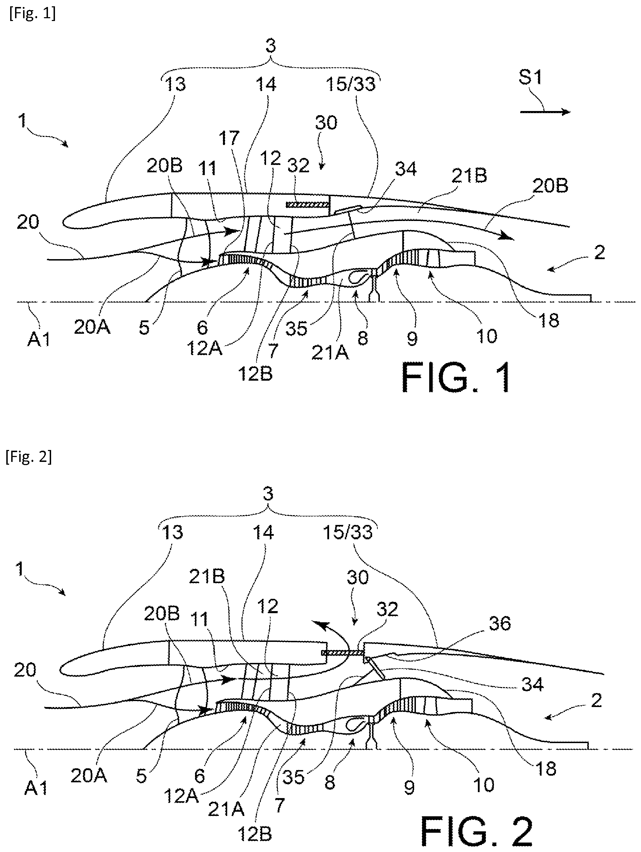

Il est représenté sur les figures 1 et 2 un ensemble propulsif 1 d'aéronef présentant un axe central longitudinal A1.

Par la suite, les termes « avant » et « arrière » sont définis relativement à un sens S1 principal d'écoulement de gaz à travers l'ensemble propulsif 1 le long de l'axe A1 lorsque celui-ci génère une poussée.

L'ensemble propulsif 1 comprend une turbomachine 2, une nacelle 3 ainsi qu'un mât (non représenté) destiné à relier l'ensemble propulsif 1 à une aile de l'aéronef.

La turbomachine 2 est dans cet exemple un turboréacteur à double flux comprenant, de l'avant vers l'arrière, une soufflante 5, un compresseur basse pression 6, un compresseur haute pression 7, une chambre de combustion 8, une turbine haute pression 9 et une turbine basse pression 10. Les compresseurs 6 et 7, la chambre de combustion 8 et les turbines 9 et 10 forment un générateur de gaz.

Le turboréacteur 2 est doté d'un carter externe 11 entourant la soufflante 5 et relié à un moyeu du turboréacteur 2 par des bras structuraux 12 qui s'étendent radialement à travers la veine secondaire 21B.

De manière connue en soi, les bras 12 sont circonférentiellement répartis autour de l'axe A1 et sont chacun fixés par un pied audit moyeu et par une tête au carter externe 11, notamment de manière à faire transiter des efforts entre le générateur de gaz et le mât de l'ensemble propulsif 1.

Dans cet exemple, les bras 12 forment des aubes directrices de sortie permettant de redresser le flux secondaire 20B en arrière de la soufflante 5.

Chacun des bras 12 comprend à cet effet une extrémité avant 12A formant un bord d'attaque et une extrémité arrière 12B formant un bord de fuite.

La nacelle 3 comprend une section avant formant une entrée d'air 13, une section médiane qui comporte des capots de soufflante 14 enveloppant le carter externe 11 et une section arrière 15.

En fonctionnement, un écoulement d'air 20 pénètre dans l'ensemble propulsif 1 par l'entrée d'air 13, traverse la soufflante 5 puis se divise en un flux primaire 20A et un flux secondaire 20B. Le flux primaire 20A s'écoule dans une veine primaire 21A de circulation de gaz traversant le générateur de gaz. Le flux secondaire 20B s'écoule dans une veine secondaire 21B entourant le générateur de gaz.

La veine secondaire 21B est délimitée radialement vers l'intérieur par un carénage interne fixe 18 qui enveloppe le générateur de gaz et radialement vers l'extérieur par le carter externe 11 et, dans la configuration de la figure 1, par des capots 33 d'inverseur formant la section arrière 15 de la nacelle 3 (voir plus loin ci-dessous).

La nacelle 3 comprend un inverseur de poussée 30 formant une structure mobile par rapport au turboréacteur 2 et en particulier par rapport au carter externe 11 qui forme une structure fixe de l'ensemble propulsif 1.

Dans cet exemple, la structure mobile de l'inverseur 30 comprend des grilles de déviation 32, les capots 33 précités, des volets d'obturation 34 et des biellettes 35.

La figure 1 montre l'inverseur 30 dans une configuration de poussée directe.

Dans cette configuration, les capots 33 sont dans une position de fermeture, ou position avancée, dans laquelle ils sont sensiblement en appui sur une extrémité arrière de la section médiane et dans laquelle les grilles 32 sont logées dans un espace délimité radialement par le carter externe 11 d'une part et par les capots de soufflante 14 d'autre part.

En configuration de poussée directe, les volets 34 sont rétractés au sein d'une cavité 36 (voir figure 2) formée par les capots 33.

L'inverseur 30 permet ainsi de canaliser le flux secondaire 20B vers l'arrière de l'ensemble propulsif 1 de manière à générer une poussée.

La figure 2 montre l'inverseur 30 dans une configuration d'inversion de poussée.

Dans cette configuration, les capots 33 sont dans une position d'ouverture, ou position reculée, dans laquelle ils sont longitudinalement éloignés de la section médiane de manière à définir une ouverture radiale de la veine secondaire 21B. Les grilles 32 s'étendent à travers cette ouverture radiale.

En configuration d'inversion de poussée, les volets 34 sont déployés radialement dans la veine secondaire 21B de manière à diriger le flux secondaire 20B vers les grilles 32 lesquelles permettent d'orienter le flux ainsi redirigé vers l'avant de l'ensemble propulsif 1 afin de générer une contre-poussée.

L'invention se rapporte plus spécifiquement à l'actionnement de la structure mobile de l'inverseur 30.

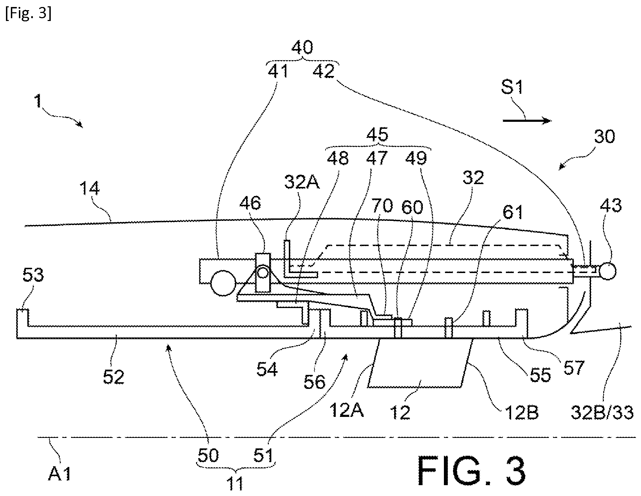

Les figures 3 à 5 montrent un dispositif d'actionnement selon un premier mode de réalisation.

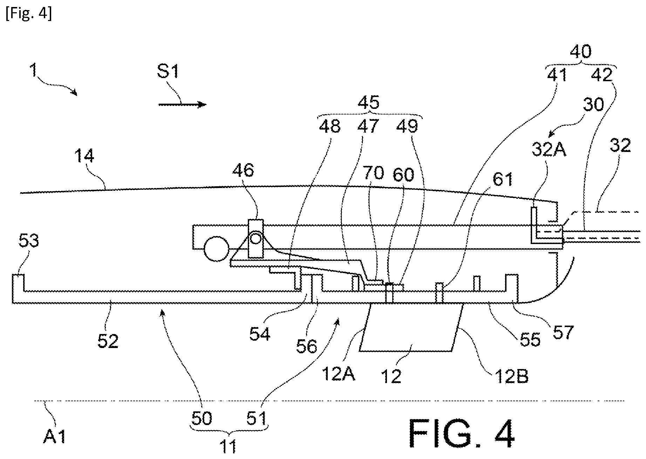

Ce dispositif d'actionnement comprend un vérin 40 comprenant un corps 41 et une tige 42 mobile par rapport au corps 41 entre une position rétractée, illustrée à la figure 3, et une position déployée, illustrée à la figure 4.

Le vérin 40 est ici un vérin hydraulique.

Dans cet exemple, le vérin 40 est télescopique, permettant de pallier les phénomènes de déflexion et de foisonnement de la structure mobile par comparaison avec un vérin non télescopique. Dans une variante de réalisation, le vérin 40 peut être non télescopique.

Le dispositif d'actionnement peut aussi comprendre un dispositif de limitation de flambage (non représenté).

En référence aux figures 3 et 4, la tige 42 est déplacée entre les positions rétractée et déployée selon une direction d'actionnement parallèle à l'axe A1. Dans une variante non représentée, la direction d'actionnement peut être oblique par rapport à l'axe A1.

La tige 42 du vérin 40 comprend une extrémité libre 43 reliée à la structure mobile de l'inverseur 30.

Dans cet exemple, l'extrémité libre 43 de la tige 42 est articulée sur un cadre arrière 32B des grilles 32 lequel est solidaire des capots 33 ou de l'un des capots 33, étant entendu que l'inverseur 30 peut présenter une architecture conventionnelle en C, en D ou en O.

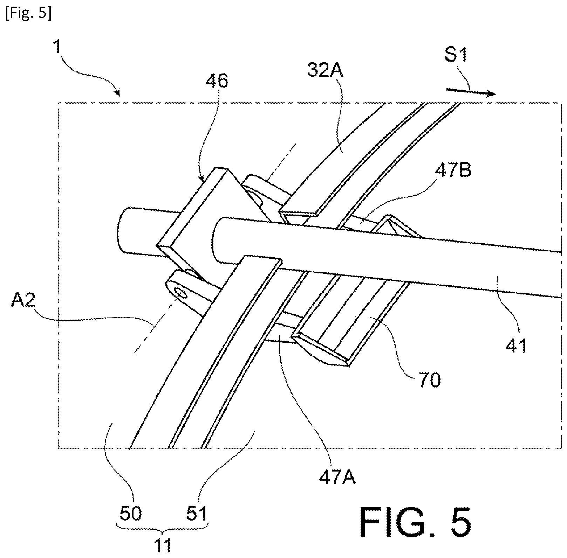

Le corps 41 du vérin 40 est dans cet exemple articulé à une structure de liaison 45 par l'intermédiaire d'un cardan 46 autour d'un axe d'articulation A2 passant par un plan orthogonal à l'axe A1 (voir figure 5).

Le cardan 46 est dans cet exemple monté sur une partie du corps 41 située à proximité d'une extrémité avant du vérin 40, opposée à l'extrémité libre 43 de la tige 42, de manière à envelopper le corps 41 du vérin 40.

Radialement, le vérin 40 s'étend entre une surface interne et une surface externe des grilles 32, c'est-à-dire dans leur épaisseur.

Dans une variante non représentée, le vérin 40 s'étend radialement vers l'intérieur par rapport à une telle surface interne des grilles 32.

Le cardan 46 s'étend à l'avant des grilles 32, plus précisément à une position située axialement en avant par rapport à un cadre avant 32A des grilles 32, y compris lorsque le vérin 40 est en position rétractée (figure 3).

Le cardan 46 et la structure de liaison 45 sont ainsi configurés pour s'étendre en-dehors du volume des grilles 32, ce qui permet d'augmenter leur surface de déviation utile.

La structure de liaison 45 des figures 3 à 5 comprend une ferrure 47 ainsi que deux éléments de support 48 et 49 de cette ferrure 47.

Les éléments de support 48 et 49 sont fixés sur le carter externe 11.

Dans ce mode de réalisation, le carter externe 11 comprend un carter de soufflante 50 et un carter intermédiaire 51 formant un prolongement axial du carter de soufflante 50.

De manière connue en soi, le carter de soufflante 50 forme une virole 52 comprenant à ses extrémités axiales une bride avant 53 et une bride arrière 54. De même, le carter intermédiaire 51 forme une virole 55 comprenant à ses extrémités axiales une bride avant 56 et une bride arrière 57.

La bride arrière 54 du carter de soufflante 50 et la bride avant 56 du carter intermédiaire 51 sont reliées l'une à l'autre par des moyens de fixation (non représentés) tels que des boulons ou des rivets.

En référence à la figure 3, la tête de chacun des bras 12, c'est-à-dire leur extrémité radialement vers l'extérieur par rapport à l'axe A1, est disposée radialement en vis-à-vis d'une surface interne de la virole 55 formée par le carter intermédiaire 51 et est fixée à cette virole 55 par des moyens de fixation 60 et 61 tels que des goujons ou des vis.

Chacun des bras 12 ainsi que leur bord d'attaque 12A et leur bord de fuite 12B s'étendent axialement entre les brides avant 56 et arrière 57 du carter intermédiaire 51.

Dans cet exemple, les moyens de fixation 60 forment une première rangée et sont positionnés à proximité axiale du bord d'attaque 12A des bras 12. Les moyens de fixation 61 forment une deuxième rangée et sont positionnés à proximité axiale du bord de fuite 12B des bras 12, axialement vers l'arrière par rapport aux moyens de fixation 60.

Chacun des moyens de fixation 60 et 61 s'étend radialement à travers la virole 55 du carter intermédiaire 51.

Dans cet exemple nullement limitatif, chacun des bras 12 est ainsi fixé au carter intermédiaire 51 à l'avant par deux moyens de fixation 60 et à l'arrière par deux moyens de fixation 61.

L'élément de support 49 de la structure de liaison 45 est disposé sur une surface externe de la virole 55 du carter intermédiaire 51.

Dans cet exemple, l'élément de support 49 est circonférentiellement aligné avec l'un des bras 12 et s'étend axialement entre le bord d'attaque 12A et le bord de fuite 12B de la tête de ce bras 12. Dans la suite de la description, est fait référence par défaut à ce bras 12.

L'élément de support 49 est fixé à la virole 55 par les mêmes moyens de fixation 60 qui solidarisent le bras 12 au carter intermédiaire 51.

Concernant l'élément de support 48, celui-ci présente dans cet exemple une section en L formant une patte radiale et une patte axiale.

La patte radiale de l'élément de support 48 est disposée contre une surface avant de la bride arrière 54 du carter de soufflante 50 et est fixée à celle-ci ainsi qu'à la bride avant 56 du carter intermédiaire 51 par des moyens de fixation tels que des vis ou des boulons (non représentés) traversant axialement ces différentes pièces.

Dans cet exemple, les éléments de support 48 et 49 forment des pièces d'interface qui sont destinées à rester solidaires du carter externe 11 en cas d'intervention de maintenance sur le dispositif d'actionnement. Les éléments de support 48 et 49 sont à cet effet configurés pour pouvoir y fixer la ferrure 47 de manière amovible, éventuellement avec destruction des moyens de fixation (non représentés) correspondants.

En référence à la figure 5, la ferrure 47 s'étend longitudinalement de manière à former une poutre double comprenant deux bras 47A et 47B s'étendant circonférentiellement de part et d'autre du vérin 40 (voir figure 5).

Une partie avant des bras 47A et 47B est articulée sur le cardan 46.

Chacun des bras 47A et 47B de la ferrure 47 forme une surface disposée en vis-à-vis de ladite patte axiale de l'élément de support 48. Les bras 47A et 47B sont solidarisés à cette patte axiale de l'élément de support 48 par des moyens de fixation tels que des vis ou des boulons (non représentés).

La ferrure 47 comprend une partie arrière formant une patte arrière 70 s'étendant circonférentiellement de manière à relier les bras 47A et 47B l'un à l'autre (voir figure 5).

La patte arrière 70 de la ferrure 47 est disposée sur une surface externe de l'élément de support 49 et est fixée à cet élément de support 49 par des moyens de fixations tels que des vis ou des goujons (non représentés) qui sont dans cet exemple différents des moyens de fixation 60 précités.

Bien entendu, la ferrure 47 peut présenter une géométrie différente de celle illustrée sur la figure 5 et former par exemple une poutre ayant un unique bras (non représenté) s'étendant radialement sous le vérin 40.

Dans cet exemple, les moyens de fixation de la ferrure 47 à l'élément de support 49 sont axialement disposés à proximité du bord d'attaque 12A de la tête du bras 12 (voir figure 3).

La structure de liaison 45 permet ainsi de relier le vérin 40 au carter externe 11 de manière à définir un chemin principal d'effort passant par le bras 12. En particulier, lorsque la structure mobile de l'inverseur 30 est en configuration d'inversion de poussée ou qu'elle est déplacée vers cette configuration, la structure mobile exerce sur le vérin 40 un effort axial qui est supporté par le bras 12, cet effort transitant par la ferrure 47, l'élément de support 49 et les moyens de fixation 60.

L'invention permet ainsi de réduire le chargement du carter externe 11 et a fortiori de la virole 52 du carter de soufflante 50 qui est susceptible de se déformer en cas de rupture d'une ou plusieurs aubes de la soufflante 5. A cet égard, le corps 41 du vérin 40 et la ferrure 47 sont montés en porte-à-faux sur le carter de soufflante 50 compte tenu de la disposition relative des éléments de support 48 et 49 (voir figure 3).

La ferrure 47 agit en effet comme une poutre de reprise d'effort axial supportée par le bras 12.

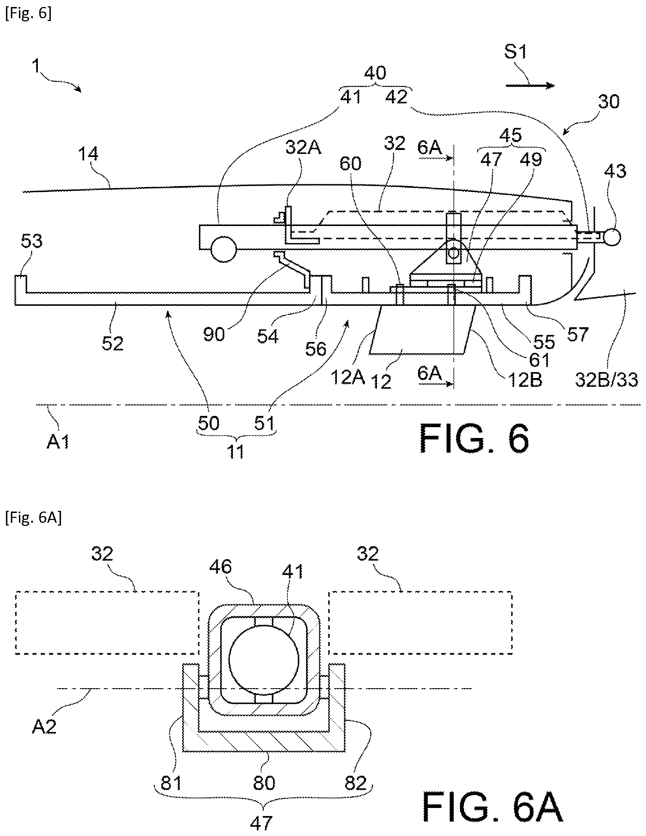

Les figures 6 et 6A montrent un dispositif d'actionnement selon un deuxième mode de réalisation.

Ce deuxième mode de réalisation est décrit uniquement selon ses différences par rapport au premier mode de réalisation. La description qui précède s'applique par analogie, eu égard à ces différences.

Dans cet exemple, la structure de liaison 45 comprend une ferrure 47 et un unique élément de support 49.

L'élément de support 49 est fixé à la virole 55 par les mêmes moyens de fixation 60 et 61 qui solidarisent le bras 12 au carter intermédiaire 51.

La ferrure 47 de la structure de liaison 45 présente une section en U (voir figure 6A) comprenant une base 80 et deux pattes radiales 81 et 82.

La base 80 de la ferrure 47 est disposée sur l'élément de support 49 et fixée à celui-ci par des moyens de fixation (non représentés) tels que des vis.

En référence à la figure 6A, qui montre le dispositif d'actionnement selon un plan de coupe passant par l'axe A2 d'articulation du corps 41 du vérin 40 à la ferrure 47, les pattes 81 et 82 s'étendent circonférentiellement de part et d'autre du cardan 46 et sont reliés au cardan 46 de sorte que l'axe A2 soit radialement décentré par rapport à l'axe d'actionnement du vérin 40 afin que la ferrure 47 s'étende en-dehors du volume des grilles 32.

La ferrure 47 et plus généralement structure de liaison 45 s'étendent ainsi au droit du bras 12 de sorte que le chemin principal d'effort soit sensiblement raccourci par rapport au premier mode de réalisation.

Dans cet exemple, le cardan 46 est monté sur une partie médiane du corps 41 du vérin 40 qui est proche du centre de gravité du vérin 40.

Cette disposition permet d'améliorer la reprise des efforts du vérin 40 par le bras 12.

Cette disposition permet aussi de réduire le risque de flambage du vérin 40 et donc de réduire sa dimension et la masse du dispositif d'actionnement.

Dans cet exemple, une structure de rétention 90 est fixée sur la bride arrière 54 du carter de soufflante 50 de manière former une butée axiale pour le vérin 40 permettant de le retenir par exemple en situation de rupture d'aube(s) de la soufflante 5.

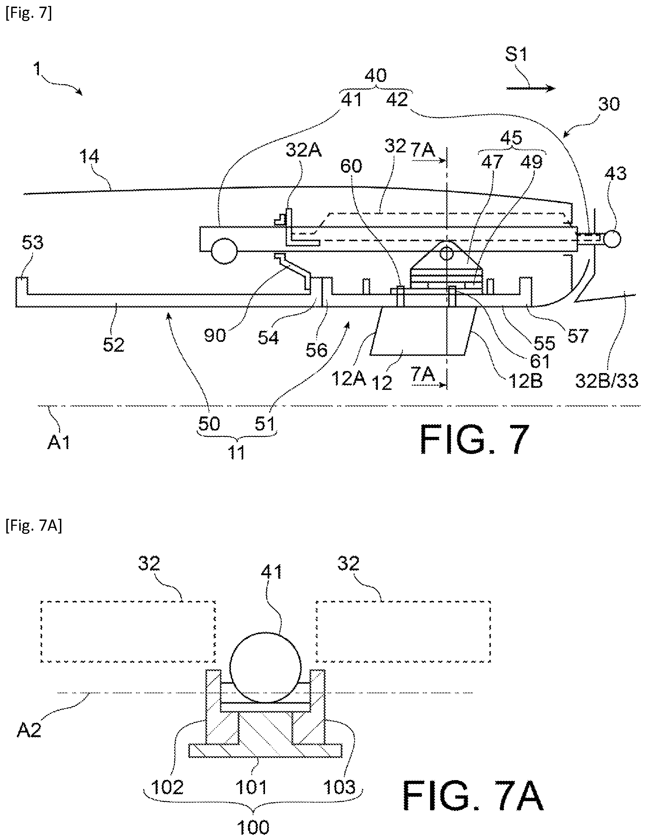

Les figures 7 et 7A montrent un dispositif d'actionnement selon un troisième mode de réalisation , qui n'est pas couvert par les revendications.

Ce troisième mode de réalisation est décrit uniquement selon ses différences par rapport au deuxième mode de réalisation. La description qui précède s'applique par analogie, eu égard à ces différences.

Dans ce mode de réalisation, le corps 41 du vérin 40 est articulé sur la ferrure 47 par une structure 100 du type affût.

En référence à la figure 7A, qui montre le dispositif d'actionnement de la figure 7 selon un plan de coupe passant par l'axe A2 d'articulation du corps 41 du vérin 40 à la ferrure 47, l'affût 100 comprend une embase 101 et des éléments de ferrure 102 et 103 s'étendant de part et d'autre du corps 41 du vérin 40.

L'embase 101 et les éléments de ferrure 102 et 103 s'étendent radialement en-dessous des grilles 32, en-dehors du volume qu'elles définissent, ce que permet d'augmenter leur surface utile de déviation.

Un tel affût 100 est de surcroît plus compact qu'un cardan 46 tel que ceux illustrés sur les figures 3 et 6A.

L'invention n'est pas limitée aux modes de réalisation décrits ci-dessus. Ainsi, par exemple, le carter externe 11 peut être dépourvu de carter intermédiaire 51, les bras 12 peuvent être reliés au carter de soufflante 50 et la structure de liaison 45 peut être reliée au carter de soufflante 50 de manière à transmettre les charges du dispositif d'actionnement à l'un de ces bras 12.

Pour autre exemple, dans chacun des modes de réalisation décrits ci-dessus, l'actionneur 40 peut être relié à la structure de liaison 45 par un organe d'articulation différent du cardan 46 des figures 3 à 6A et de l'affût 100 de la figure 7A.

Très préférentiellement, comme évoqué précédemment en particulier en référence à la figure 3, le cardan 46 de support du vérin est agencé en amont des grilles 32 et du bras structural 12 de carter.

Les modes de réalisation décrits ci-dessus peuvent en outre être combinés. Par exemple, dans une variante non représentée, le cardan 46 du dispositif d'actionnement de la figure 3 peut être remplacé par un affût 100 similaire à celui de la figure 7A, la géométrie de la ferrure 47 pouvant être adaptée en conséquence.

Bien entendu, le dispositif d'actionnement peut comprendre plusieurs actionneurs 40 et structures de liaison 45 correspondantes tels que décrits ci-dessus, chaque vérin 40 pouvant être configuré pour définir un chemin principal d'effort passant par un bras 12 respectif de l'ensemble propulsif 1.

## Revendications

1. Ensemble propulsif (1) pour aéronef, comprenant une structure fixe (11), une structure mobile (32, 33) d'inversion de poussée et un actionneur linéaire (40) relié à la structure mobile (32, 33) de manière à pouvoir déplacer ladite structure mobile (32, 33) par rapport à la structure fixe (11) en translation le long d'un axe longitudinal (A1), la structure fixe (11) comprenant un carter externe (11) s'étendant autour de l'axe longitudinal (A1), un moyeu, un bras structural (12) reliant le carter externe (11) au moyeu, une structure de liaison (45) reliant l'actionneur (40) au carter externe (11) et des moyens de fixation (60, 61) de la structure de liaison (45) sur le carter externe (11), l'ensemble propulsif étant **caractérisé en ce que** la structure mobile (32, 33) comprend des grilles de déviation (32), les moyens de fixation (60, 61) étant positionnés axialement entre un bord d'attaque (12A) et un bord de fuite (12B) d'une tête du bras structural (12),
la structure de liaison (45) comprenant un élément de support (49) solidaire du carter externe (11) et une ferrure (47) fixée sur l'élément de support (49),
ladite ferrure (7) s'étendant longitudinalement de manière à former une poutre double comprenant deux bras (47A, 47B) s'étendant circonférentiellement de part et d'autre dudit actionneur (40), et une patte arrière (70) s'étendant circonférentiellement de manière à relier les bras (47A, 47B) l'un à l'autre,
une partie avant des bras (47A, 47B) étant articulée sur un cardan (46) configuré pour articuler ledit actionneur (40) sur ladite ferrure (47).

2. Ensemble propulsif (1) selon la revendication 1, dans lequel les moyens de fixation (60, 61) s'étendent radialement à travers une virole (55) du carter externe (11).

3. Ensemble propulsif (1) selon la revendication 1 ou 2, dans lequel les moyens de fixation (60, 61) sont configurés pour fixer le bras (12) au carter externe (11).

4. Ensemble propulsif (1) selon la revendication 1, dans lequel la ferrure (47) est fixée sur une bride (54) du carter externe (11).

5. Ensemble propulsif (1) selon l'une quelconque des revendications 1 à 4, dans lequel la structure de liaison (45) comprend une partie avant reliée à l'actionneur (40) et une partie arrière (70) reliée au carter externe (11) de sorte que l'actionneur (40) s'étende en porte-à-faux.

6. Ensemble propulsif (1) selon l'une quelconque des revendications 1 à 5, dans lequel le bras (12) forme une aube directrice de sortie.

7. Ensemble propulsif (1) selon l'une quelconque des revendications 1 à 6, dans lequel le carter externe (11) comprend un carter de soufflante (50) et un carter intermédiaire (51), le bras (12) étant fixé au carter intermédiaire (51).

8. Ensemble propulsif (1) selon l'une quelconque des revendications 1 à 7, dans lequel l'actionneur (40) est un vérin télescopique.

## Patentansprüche

1. Antriebsanlage (1) für ein Luftfahrzeug, umfassend eine feste Struktur (11), eine bewegliche Schubumkehrstruktur (32, 33) und einen Linearantrieb (40), der mit der beweglichen Struktur (32, 33) verbunden ist, um diese entlang einer Längsachse (A1) translatorisch relativ zur festen Struktur (11) zu bewegen,
wobei die feste Struktur (11) ein Außengehäuse (11), das sich um die Längsachse (A1) erstreckt, einen Nabenbereich, einen Strukturausleger (12), der das Außengehäuse (11) mit der Nabe verbindet, eine Verbindungsstruktur (45), die den Antrieb (40) mit dem Außengehäuse (11) verbindet, sowie Befestigungsmittel (60, 61) zum Befestigen der Verbindungsstruktur (45) am Außengehäuse (11) umfasst,
**dadurch gekennzeichnet, dass** die bewegliche Struktur (32, 33) Umlenkgitter (32) umfasst, wobei die Befestigungsmittel (60, 61) axial zwischen einer Vorderkante (12A) und einer Hinterkante (12B) eines Kopfes des Auslegers (12) angeordnet sind,
dass die Verbindungsstruktur (45) ein Tragelement (49) umfasst, das fest mit dem Außengehäuse (11) verbunden ist, sowie eine Anlenkung (47), die an dem Tragelement (49) befestigt ist,
wobei die Anlenkung (47) sich in Längsrichtung erstreckt und einen Doppelträger bildet, der zwei Arme (47A, 47B) umfasst, die sich auf beiden Seiten des Antriebs (40) in Umfangsrichtung erstrecken, sowie eine hintere Lasche (70), die sich in Umfangsrichtung erstreckt, um die Arme (47A, 47B) miteinander zu verbinden,
wobei ein vorderer Abschnitt der Arme (47A, 47B) gelenkig mit einem Kardangelenk (46) verbunden ist, das dazu eingerichtet ist, den Antrieb (40) an der Anlenkung (47) zu artikulieren.

2. Antriebsanlage (1) nach Anspruch 1, **dadurch gekennzeichnet, dass** sich die Befestigungsmittel (60, 61) radial durch eine Verkleidung (55) des Außengehäuses (11) erstrecken.

3. Antriebsanlage (1) nach Anspruch 1 oder 2, **dadurch gekennzeichnet, dass** die Befestigungsmittel (60, 61) dazu eingerichtet sind, den Ausleger (12) am Außengehäuse (11) zu befestigen.

4. Antriebsanlage (1) nach Anspruch 1, **dadurch gekennzeichnet, dass** die Anlenkung (47) an einem Flansch (54) des Außengehäuses (11) befestigt ist.

5. Antriebsanlage (1) nach einem der Ansprüche 1 bis 4, **dadurch gekennzeichnet, dass** die Verbindungsstruktur (45) einen vorderen Teil umfasst, der mit dem Antrieb (40) verbunden ist, und einen hinteren Teil (70), der mit dem Außengehäuse (11) verbunden ist, sodass der Antrieb (40) auskragend angeordnet ist.

6. Antriebsanlage (1) nach einem der Ansprüche 1 bis 5, **dadurch gekennzeichnet, dass** der Ausleger (12) eine Austrittsleitschaufel bildet.

7. Antriebsanlage (1) nach einem der Ansprüche 1 bis 6, **dadurch gekennzeichnet, dass** das Außengehäuse (11) ein Fan-Gehäuse (50) und ein Zwischengehäuse (51) umfasst, wobei der Ausleger (12) am Zwischengehäuse (51) befestigt ist.

8. Antriebsanlage (1) nach einem der Ansprüche 1 bis 7, **dadurch gekennzeichnet, dass** der Antrieb (40) ein teleskopischer Zylinder ist.

## Claims

1. An aircraft propulsion assembly (1), comprising a fixed structure (11), a movable thrust reversing structure (32, 33) and a linear actuator (40) connected to the movable structure (32, 33) so as to be able to translationally move said movable structure (32, 33) relative to the fixed structure (11) along a longitudinal axis (A1), the fixed structure (11) comprising an outer casing (11) extending about the longitudinal axis (A1), a hub, one structural arm (12) connecting the outer casing (11) to the hub, a connecting structure (45) connecting the actuator (40) to the outer casing (11) and means (60, 61) for fastening the connecting structure (45) to the outer casing (11), the propulsion assembly being **characterized in that** the movable structure (32, 33) comprises deflection cascades (32), the fastening means (60, 61) being positioned axially between a leading edge (12A) and a trailing edge (12B) of a head of the arm (12),
the connecting structure (45) comprises a support element (49) integral with the outer casing (11) and a fitting (47) fastened to the support element (49),
the fitting (47) extending longitudinally to form a double beam comprising two arms (47A, 47B) extending circumferentially on either side of said actuator (40), and a rear lug (70) extending circumferentially so as to connect the arms (47A, 47B) to each other,
a front part of the arms (47A, 47B) being hinged to a gimbal (46) configured to articulate said actuator (40) onto said fitting (47).

2. The propulsion assembly (1) according to claim 1, wherein the fastening means (60, 61) radially extend through a shroud (55) of the outer casing (11).

3. The propulsion assembly (1) according to claim 1 or 2, wherein the fastening means (60, 61) are configured to fasten the arm (12) to the outer casing (11).

4. The propulsion assembly (1) according to claim 1, wherein the fitting (47) is fastened to a flange (54) of the outer casing (11).

5. The propulsion assembly (1) according to any of claims 1 to 4, wherein the connecting structure (45) comprises a front part connected to the actuator (40) and a rear part (70) connected to the outer casing (11) so that the actuator (40) extends in a cantilevered way.

6. The propulsion assembly (1) according to any of claims 1 to 5, wherein the arm (12) forms an outlet guide vane.

7. The propulsion assembly (1) according to any of claims 1 to 6, wherein the outer casing (11) comprises a fan casing (50) and an intermediate casing (51), the arm (12) being fastened to the intermediate casing (51).

8. The propulsion assembly (1) according to any of claims 1 to 7, wherein the actuator (40) is a telescopic cylinder.
